# EUROPEAN PATENT APPLICATION

(11) **EP 4 386 200 A1**
(43) Date of publication of application: **19.06.2024**
(21) Application number: 22213235.9
(22) Date of filing: 13.12.2022
(51) Int. Cl.: F03D 7/02, B63B 35/44

(54) **SYSTEM AND METHOD FOR OPERATING A FLOATING WIND TURBINE, FLOATING WIND TURBINE, WIND PARK, COMPUTER PROGRAM PRODUCT AND COMPUTER-READABLE STORAGE MEDIUM**

(71) Applicant: Siemens Gamesa Renewable Energy A/S, 7330 Brande (DK)
(72) Inventor: Cavichioli Gonzaga, Carlos Alberto, 7100 Vejle (DK); Esbensen, Thomas, 7400 Herning (DK); Steffensen, Henrik, 8000 Århus (DK)
(74) Representative: SGRE-Association

(57) **Abstract**

The invention relates to a system (100) for reducing power output fluctuations of a power output (P1, P1a, P2, P3) generated by at least one floating wind turbine (10, 20) having a rotor (11, 21) and blades (12, 22), comprising: a power output determining device (40) for determining an amplitude of power output fluctuations generated by the at least one floating wind turbine (10, 20), and a wind turbine controlling device (41) for controlling an operation mode of the at least one floating wind turbine (10, 20) based on the determined amplitude in order to lower the amplitude of the power output fluctuations. The invention further relates to a floating wind turbine (10, 20), a wind park (200), a method for providing electrical energy to an electrical grid by operating the inventive system (100), a computer program product (80) for carrying out the inventive method and a computer-readable storage medium (90) having the computer program product (80) stored thereon.

## Description

### Field of the invention

The present invention relates to a system and a method for operating a floating wind turbine as well as a wind park comprising floating wind turbines. The invention further relates to a computer program product for controlling a floating wind turbine and a computer-readable storage medium having stored thereon a computer program product for operating a floating wind turbine.

### Art Background

In prior art, there are different kinds of wind turbines. In general, wind turbines are provided as onshore wind turbines or offshore wind turbines. Recently, floating (offshore) wind turbines are developed. Floating wind turbines are complex systems with multiple variables and multiple degrees of freedom. Wind, wave and current loadings, which all are irregular by nature along with aerodynamical, structural and hydrodynamical couplings, as well as control actuations, all contribute to a complex dynamical behavior. In order to avoid dangerous and/or damaging situations for the environment of the wind turbine as well as the wind turbine itself, the operation and movements of the wind turbine are monitored. In case it is determined that, for example, measured and monitored inclination values of an inclination of the wind turbine are too high, a control system will be activated in order to prevent overloading and/or capsizing of the wind turbine.

In the European patent application EP 2882960 A1, a floating wind turbine safety system is described in which fore-aft and side-side inclination values are measured by means of acceleration sensors and inclination sensors. In case a measured inclination value exceeds a predetermined threshold, countermeasures will be initiated in order to keep the operation of the wind turbine running and/or in order to prevent damages to the wind turbine. Further, systems and methods are known for operating floating wind turbines.

However, even though present systems and methods provide sophisticated strategies for operating floating wind turbines in a relatively stable manner, there are still challenges when it comes to providing the generated power output and/or electrical energy to an electrical grid.

### Summary of the Invention

It is an object of the present invention to provide a system and a method for an improved way of operating a floating wind turbine and/or a wind park comprising floating wind turbines in order to simplify the usage of the generated power output in an electrical grid. This object is achieved by the subject-matters of the claims. In particular, the object is achieved by a system according to claim 1, a floating wind turbine according to claim 11, a wind park according to claim 12, a method according to claim 13, a computer program product according to claim 14 and a computer-readable storage medium according to claim 15 of the present application. Further features and details of the invention can be drawn from the dependent claims, the description, and the figures. Features and details discussed with respect to the inventive method are also correlated with the inventive system, the inventive computer program product, the inventive computer-readable storage medium and the other way around.

According to the present invention, a system is proposed for reducing power output fluctuations of a power output generated by at least one floating wind turbine having a rotor and blades, comprising a power output determining device for determining an amplitude of power output fluctuations generated by the at least one floating wind turbine, and a wind turbine controlling device for controlling an operation mode of the at least one floating wind turbine based on the determined amplitude in order to lower the amplitude of the power output fluctuations.

In the course of the present invention, it was recognized that power output fluctuations can be reliably lowered by appropriately controlling the operation mode of the at least one floating wind turbine. In particular, it was recognized that by monitoring the frequency of the power output and determining the amplitude of the power fluctuations, respectively, the basis for proper countermeasures in order to lower the amplitude of the power output fluctuations can be achieved in a simple and reliable way. With lowered power output fluctuations, the usage of the generated power output in the electricity grid can be simplified. In other words, compared to present floating wind turbine systems, a power output can be generated, which complies better and/or in a less complicated way with grid requirements. In addition, when controlling the operation mode of the at least one floating wind turbine for lowering the amplitude of the power output fluctuations, part of the at least one floating wind turbine like a tower and/or a floating foundation are subjected to lower loads. This improves the durability of the at least one floating wind turbine and reduces efforts for maintaining the at least one floating wind turbine, respectively.

According to the present invention, the natural amplitude of the power output fluctuations is determined and taken into consideration in order to amend the operation mode of the at least one floating wind turbine in such a way that the future amplitude of the power output fluctuations will be reduced. In other words, the natural frequency of the power output can be monitored while the amplitude of said frequency is taken into consideration for controlling the operation mode of the at least one floating wind turbine in order to prevent and/or reduce peaks in the frequency of future power output. Power output fluctuations can be understood as changes in power output over time resulting in a certain frequency of power output having a certain amplitude and wave length. Lowering the amplitude may thus be understood as smoothening and/or straightening the curve of the frequency of the generated power output. Controlling the operation mode of the at least one floating wind turbine based on the determined amplitude can be understood such that the operation mode can be controlled by using the determined amplitude, the corresponding frequency comprising the amplitude and/or frequency peaks of the frequency. Frequency peaks can be understood as high and low frequency peaks.

Determining the amplitude may further be understood as monitoring and/or measuring the frequency of the power output for determining the amplitude of said frequency. Lowering the amplitude of the power output fluctuations can be understood as preventing and/or lowering peaks in the frequency of future power output generated by the at least one floating wind turbine. The operation mode can be understood as the way of operating and/or controlling the at least one floating wind turbine. The operation mode can be controlled and/or changed by controlling different operation parameters like a blade pitch and/or a generator torque. The wind turbine controlling device may thus be configured for performing, for example, a blade pitch control in order to control the blade pitch and/or a torque control in order to control the torque of a generator and/or the rotor for controlling the operation mode. The operation mode may thus be controlled based on certain and/or predetermined threshold values like, for example, threshold values for an allowed maximum rotor speed, generator torque and/or power output. Determining an amplitude of power output fluctuations may be understood as determining an amplitude of power output fluctuations at critical frequencies generated by the at least one floating wind turbine. Critical frequencies may be understood as a predetermined set of frequencies set as parameters or tracked during operation of the floating wind turbine. For example, critical frequencies may be predetermined with regard to a tower bending natural frequency, a floater natural frequency and/or a blade natural frequency.

The wind turbine controlling device may comprise a plurality of wind turbine controlling means, provided inside the at least one floating wind turbine, outside the at least one floating wind turbine and/or away from the at least one floating wind turbine like onshore, while the at least one floating wind turbine is located offshore. The system is provided for reducing power output fluctuations of a power output generated by one floating wind turbine or by a plurality of floating wind turbines like in a wind park having a plurality of floating wind turbines. The floating wind turbine is preferably understood to be a floating offshore wind turbine.

The inventive system can further be provided for controlling the operation mode of the at least one floating wind turbine by data communication between a data communication device and/or data transmission device located at the at least one floating wind turbine and a land based data communication device and/or data receiving device. The wind turbine controlling device may comprise at least one sensor, at least one controller, at least one actuator and/or a computer for controlling the operation mode of the at least one floating wind turbine based on the determined amplitude.

According to a further embodiment of the present invention, it is possible that the system comprises a rotor speed controlling device for controlling the rotor speed of the rotor based on the determined amplitude in order to lower the amplitude of the power output fluctuations. That is, a rotor speed controlling device is provided for controlling the natural frequency of the rotor speed resulting in a power output fluctuation with a lowered amplitude and lowered frequency peaks, respectively. Controlling the rotor speed is an easy and reliable way of controlling the operation mode for lowering the amplitude of the power output fluctuations in the desired manner. Controlling the rotor speed may be achieved by controlling the speed of the drive train and/or the generator of the at least one floating wind turbine. Rotor speed can be controlled in further different ways. For example, rotor speed can be controlled by pitch control and/or by torque control. Pitch control can be performed by acting on the blade pitch angle and/or by acting on the generator torque. For example, increasing generator demanded torque decreases generator speed. In other words, an increasing torque will result in a decreasing generator speed which will reduce the generator torque and the rotor speed, respectively. The same applies to the blade pitch angle. When the blade pitch angle increases, the blades facing the wind extract lower energy from it, which will lower the rotor speed. For performing the torque control and/or the pitch control, different notch filters may be provided to eliminate any unnecessary control action due to measured frequency peaks of the generated power output. That is, at least one notch filter and/or respective filter means can be provided to damp the excited frequencies of the power output generated by the at least one floating wind turbine. For example, the rotor speed controlling device may comprise at least one notch filtering means for performing notch filtering on the frequency of the natural power output in order to lower the amplitude of future power output fluctuations. Further, the rotor speed controlling device may be configured for performing the notch filtering based on a measured rotor speed and/or a measured rotor speed error. Furthermore, the system may comprise a rotor speed measuring device for measuring an actual and/or natural rotor speed of the rotor, wherein the rotor speed controlling device may be configured for controlling and/or amending the rotor speed of the rotor based on a predetermined rotor speed reference value and for controlling the rotor speed reference value based on the measured actual rotor speed. In addition, the rotor speed controlling device can be configured for controlling the rotor speed of the rotor based on a predetermined saturation limit of the generator.

The described wind turbine controlling device may be configured for manipulating a speed control loop irrespective of the present way of controlling the rotor speed, for example, irrespective of whether the rotor speed is controlled by speed-power or a speed-pitch controller.

In a further embodiment of the present invention, it is possible that the wind turbine controlling device of the system is configured for controlling the operation mode of the at least one floating wind turbine in order to lower the amplitude of the power output fluctuations by initiating one of the following measures:
- initiating a curtailed operation mode of the at least one floating wind turbine with reduced power output and/or reduced rotor speed,
- initiating a restricted operation mode of the at least one floating wind turbine, in which enhancing of power output and/or rotor speed is prohibited,
- initiating a blade pitch angle adjusting mode of the at least one floating wind turbine, in which a blade pitch angle of at least one blade of the at least one floating wind turbine is changed,
- initiating an idle operation mode of the at least one floating wind turbine.

Applying the above described method, a sequence of decisions can be provided leading to a lowered amplitude and/or reduced frequency peaks and thus to power output that complies better with given grid requirements. For initiating the operation modes, the wind turbine controlling device may comprise suitable initiating means inside and outside the at least one floating wind turbine like at least one sensor, at least one actuator, a controller and/or a computer. In the curtailed operation mode, the turbine will be producing less power than in the uprated power mode, in which the wind turbine can be operated. The restricted operation mode may be understood as a partly normal operation mode, in which a so called power boost is prohibited. In the blade pitch angle adjusting mode, blade pitch offsets of at least one blade of the at least one floating wind turbine can be increased after and/or during the curtailed operation mode to reduce the average tilt and/or yaw-moments and/or steady--state inclinations. The idle operation mode can be understood as an operation mode in which the turbine is stopped until automatically resuming the operation after the stop is finished.

In accordance with the inventive system, it is further possible that the wind turbine controlling device of the system is configured for changing an operation mode of the at least one floating wind turbine, which was initiated for lowering the amplitude of the power output fluctuations, back into a normal operation mode of the at least one floating wind turbine, when the amplitude of the determined power output fluctuations of the at least one floating wind turbine becomes lower than a predetermined reference amplitude. That is, as soon as one of the four operation modes described above resulted in the desired amplitude and/or power output frequency, said operation mode will be terminated and/or switched back to the previous normal operation mode. In this way, unnecessary control actions can be prevented resulting in an energy efficient way of controlling and/or operating the at least one floating wind turbine. The normal operation mode may be understood as a natural operation mode in which it is not tried to actively and/or intentionally control and/or change the amplitude of the power output fluctuations.

Moreover, the inventive system may comprise a floater motion determining device for determining the motion and/or location of a floating foundation of the at least one floating wind turbine, wherein the wind turbine controlling device is configured for controlling an operation mode of the at least one floating wind turbine based on the determined motion and/or location of the floating foundation in order to lower the amplitude of the power output fluctuations. The motion and the location of the floating foundation of the at least one floating wind turbine can be easily and reliably used to draw conclusions regarding a possible resulting frequency curve of the power output and the amplitude of the power output fluctuations, respectively. Therefore, determining the motion and/or location of the floating foundation and taking the corresponding values and/or parameters into account can provide a simple and reliable way to lower the amplitude of the power output fluctuations in the desired manner. The motion of the floating foundation can be understood as the velocity and/or the acceleration of the floating foundation in any direction and/or orientation. The location of the floating foundation can be understood as an absolute location, a relative location compared to a predetermined reference location, a certain position, a displacement, an inclination regarding a predetermined reference position and/or reference inclination, and/or an orientation. As an example, the motion of the floating foundation of the at least one floating wind turbine can be monitored and/or determined by the floater motion determining device and when it is determined that the acceleration and/or acceleration values of the floating foundation in a certain time window exceed a predetermined reference acceleration and/or corresponding acceleration values, which might lead to excessive peaks in frequency and/or an excessive amplitude of the power output, the operation mode is controlled in order to comply with this issue and to reduce the possible excessive amplitude, respectively.

Furthermore, the system according to the present invention may comprise a tower motion determining device for determining the motion and/or location of a tower of the at least one floating wind turbine, wherein the wind turbine controlling device is configured for controlling an operation mode of the at least one floating wind turbine based on the determined motion and/or location of the tower in order to lower the amplitude of the power output fluctuations. It has been found in the course of the present invention that the motion and the location of the tower of the at least one floating wind turbine can be used as well to draw easily and reliably conclusions regarding a possible resulting frequency curve of the power output and the amplitude of the power output fluctuations, respectively. Therefore, determining the motion and/or location of the tower and taking the corresponding values and/or parameters into account can provide a simple and reliable way to lower the amplitude of the power output fluctuations in the desired manner. The motion of the tower can be understood as the velocity and/or the acceleration of the tower, in particular of a top portion of the tower, at which the rotor is mounted, in any direction and/or orientation. The location of the tower can be understood as an absolute location, a relative location compared to a predetermined reference location, a certain position, a displacement, an inclination regarding a predetermined reference position and/or reference inclination, and/or an orientation. As an example, the motion of the tower can be monitored and/or determined by the tower motion determining device and when it is determined that inclination values of a tower inclination in a certain time window exceed predetermined reference inclination values, which might lead to excessive peaks in frequency and/or an excessive amplitude of the power output, the operation mode is controlled based on this determination in order to reduce the possible excessive amplitude.

According to a further embodiment of the present invention, the system is configured for reducing total power output fluctuations of a total power output generated jointly together by floating wind turbines each having a rotor and blades, comprising a total power output determining device for determining a total amplitude of total power output fluctuations generated by the floating wind turbines and/or by the wind park, and the wind turbine controlling device is configured for controlling an operation mode of each floating wind turbine based on the determined total amplitude in order to lower the total amplitude of the total power output fluctuations.

That is, according to this embodiment, the system can be provided, for example, for a wind park having a plurality of floating wind turbines in order to reliably smoothen the frequency and/or the amplitude of the total power output fluctuations generated by the floating wind turbines and/or by the wind park. According to the present invention, the current and/or natural amplitude of the total power output fluctuations is determined in order to amend the operation mode of at least one floating wind turbine in such a way that the future total amplitude of the total power output fluctuations will be reduced. In other words, the natural frequency of the total power output can be monitored while the total amplitude of said frequency is taken into consideration for controlling the operation mode of at least one floating wind turbine in order to prevent and/or reduce peaks in the frequency of future total power output fluctuations. Total power output fluctuations can be understood as changes in total power output over time resulting in a certain frequency of total power output of, for example, the wind park, having a certain amplitude and wave length. Lowering the total amplitude may thus be understood as smoothening and/or straightening the curve of the frequency of the generated total power output, in particular by intentionally changing the operation mode and thus the amplitude of the power output fluctuations of at least one floating wind turbine. Controlling the operation mode of each floating wind turbine does not necessarily mean that the operation mode of each floating wind turbine has to be changed. Rather, when controlling the operation modes, the operation modes of some floating wind turbines may just be monitored and kept the same while at least one operation mode of another floating wind turbine will be changed in order to lower the total amplitude of the total power output fluctuations. The total power output determining device may be configured for computing a time delay for each speed reference offset of each individual rotor speed controlling device.

Further, it is possible that the rotor speed controlling device of the inventive system is configured for controlling the rotor speed of the rotor of each floating wind turbine based on the determined total amplitude, in order to lower the total amplitude of the total power output fluctuations. Controlling the rotor speed of one or different floating wind turbines is an easy and reliable way of balancing the total power output of the floating wind turbines in order to better comply with given grid requirements. The rotor speed controlling device can be, for example, configured to compute and apply time delays for speed reference offsets of the individual floating wind turbines such that the individual power outputs sum up to a more balanced and such smoother total power output. Here, the rotor speed controlling device can further be configured for sending a calculated time delay to at least one selected floating wind turbine for controlling the at least one selected floating wind turbine accordingly.

The power output determining device of the inventive system may further be configured for determining an amplitude of the power output fluctuations of each floating wind turbine, wherein the wind turbine controlling device can be configured for controlling an operation mode of at least one floating wind turbine based on at least one determined amplitude in order to lower the total amplitude of the total power output fluctuations. In this way, the total amplitude of the total power output fluctuations can be easily controlled in a reliable way. In order to lower the total amplitude based on the at least one determined amplitude, any one of the above described features may be applied. In particular, any one of the above described features may be applied to at least one floating wind turbine in order to offset frequency peaks generated by one floating wind turbine with a suitable controlled other floating wind turbine generating corresponding power output fluctuations. For example, when it is determined that a first floating wind turbine generates a high power output (upper frequency peaks) in certain times and low or lower power output (lower frequency peaks) in other times, a second floating wind turbine can be controlled such that the second floating wind turbine will generate low power output when the first floating wind turbine generates high power output, and high power output when the first floating wind turbine generates low power output.

In addition to the above, the power output determining device of the inventive system may be configured for determining a phase of the power output fluctuations of each floating wind turbine, wherein the wind turbine controlling device is configured for controlling an operation mode of at least one floating wind turbine based on at least one determined phase in order to lower the total amplitude of the total power output fluctuations. This also provides a way of easily and reliably controlling the total amplitude of the total power output fluctuations. The wind turbine controlling device can be configured for controlling an operation mode of at least one floating wind turbine based on at least one determined phase in order to control the phase of at least one power output fluctuation of the corresponding at least one floating wind turbine in order to lower the total amplitude of the total power output fluctuations. That is, the operation modes of at least two floating wind turbines can be controlled such that the curve of the generated power output of these floating wind turbines is phase-shifted such that the total amplitude can be lowered, and/or the frequency of the total power output can be smoothened, respectively. For example, in order to phase-shift the generated curve, at least one of the floating wind turbines may be controlled into the above described curtailed operation mode, restricted operation mode, blade pitch angle adjusting mode or the idle operation mode.

A further aspect of the present invention relates to a floating wind turbine comprising the above described system for reducing power output fluctuations of a power output generated by the floating wind turbine. The floating wind turbine is preferably configured for providing electrical energy to an electricity grid. Parts of the system may be located inside a floating foundation and/or a tower of the floating wind turbine, wherein other parts of the system may be provided outside the tower and/or the floating foundation, for example onshore and/or in a cloud environment. In addition, an aspect of the invention relates to a wind park comprising the above described floating wind turbines and corresponding system for reducing total power output fluctuations of a total power output generated together by the floating wind turbines of the wind park. Therefore, the inventive floating wind turbine and the wind park bring up the same advantages as described above.

Furthermore, an aspect of the invention relates to a method for providing electrical energy to an electricity grid by operating the above described system. In this respect, the invention relates to a method for reducing power output fluctuations of a power output generated by at least one floating wind turbine having a rotor and blades, comprising the steps of determining an amplitude of power output fluctuations generated by the at least one floating wind turbine, and controlling an operation mode of the at least one floating wind turbine based on the determined amplitude in order to lower the amplitude of the power output fluctuations. The method can further comprise the step of controlling the rotor speed of the rotor based on the determined amplitude in order to lower the amplitude of the power output fluctuations.

In addition, the method may comprise controlling the operation mode of the at least one floating wind turbine in order to lower the amplitude of the power output fluctuations by initiating one of the following measures:
- initiating a curtailed operation mode of the at least one floating wind turbine with reduced power output and/or reduced rotor speed,
- initiating a restricted operation mode of the at least one floating wind turbine, in which enhancing of power output and/or rotor speed is prohibited,
- initiating a blade pitch angle adjusting mode of the at least one floating wind turbine, in which a blade pitch angle of at least one blade of the at least one floating wind turbine is changed,
- initiating an idle operation mode of the at least one floating wind turbine.

Moreover, the method may comprise the step of changing an operation mode of at least one floating wind turbine, initiated for lowering the amplitude of the power output fluctuations, back into a normal operation mode of the at least one floating wind turbine, when the amplitude of the determined power output fluctuations of the at least one floating wind turbine becomes lower than a predetermined reference amplitude. The inventive method may also comprise the steps of determining the motion and/or location of a floating foundation of the at least one floating wind turbine and controlling an operation mode of the at least one floating wind turbine based on the determined motion and/or location of the floating foundation in order to lower the amplitude of the power output fluctuations, as well as determining the motion and/or location of a tower of the at least one floating wind turbine and controlling an operation mode of the at least one floating wind turbine based on the determined motion and/or location of the tower in order to lower the amplitude of the power output fluctuations.

In accordance with a further embodiment of the invention, the method may be performed for reducing total power output fluctuations of a total power output generated together by floating wind turbines each having a rotor and blades, wherein a total amplitude of total power output fluctuations generated by the floating wind turbines is determined, and an operation mode of each floating wind turbine is controlled based on the determined total amplitude in order to lower the total amplitude of the total power output fluctuations. In this respect, the method may further comprise the step of controlling the rotor speed of the rotor of each floating wind turbine based on the determined total amplitude in order to lower the total amplitude of the total power output fluctuations. In addition, the method may comprise the steps of determining an amplitude of the power output fluctuations of each floating wind turbine and controlling an operation mode of at least one floating wind turbine based on at least one determined amplitude in order to lower the total amplitude of the total power output fluctuations and/or determining a phase of the power output fluctuations of each floating wind turbine and controlling an operation mode of at least one floating wind turbine based on at least one determined phase in order to lower the total amplitude of the total power output fluctuations.

Additionally and/or alternatively a further aspect is disclosed: a method for operating a wind turbine, in particular an offshore wind turbine, further in particular a floating offshore wind turbine, and for feeding electrical energy to an electricity grid, the method comprising the following steps:
executing steps of an embodiment of a method as disclosed supra, and/or operating an embodiment of a device as disclosed supra,
generating, by the wind turbine, electrical power and/or electrical energy,
transmitting at least a part of the electrical power and/or of the electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction,
supplying at least a part of the electrical power and/or of the electrical energy to an electrical utility grid, in particular onshore utility grid.

An additional aspect of the present invention relates to a computer program product comprising instructions to cause the above described system to carry out the inventive method. Furthermore, a computer-readable, preferably non-volatile, storage medium having stored thereon the computer program product, is provided. Hence, the inventive computer program product and the inventive computer-readable storage medium bring up the above described advantages as well.

The computer program product may be implemented as a computer-readable instruction code in any suitable programming language and/or machine language, such as JAVA, C++, C#, and/or Python. The computer program product may be stored on a computer-readable storage medium such as a data disk, a removable drive, volatile or non-volatile memory, or a built-in memory/processor. The instruction code may program a computer or other programmable devices such as a controller and/or computer in order to perform the desired functions. Further, the computer program product may be provided and/or be on a network, such as the internet, from which a user may download it as needed. The computer program product may be implemented by means of software, as well as by means of one or more special electronic circuits, that is, in hardware or in any hybrid form, that is, by means of software components and hardware components.

Further measures improving the inventive concept can be drawn from the following description of preferred embodiments, which are schematically shown in the drawings. The features and advantages, which can be drawn from the claims, from the description and from the drawings might be considered essential alone or in combination with each other, for example by integrating certain details or steps of the previously disclosed method into a computer program product, wherein the computer program product when executed on a computer is enabled to control the system, the floating wind turbine and/or the wind park.

### Brief description of the drawings

The present invention is discussed in more detail with respect to the accompanying drawings, in which
- Fig. 1: shows a floating offshore wind turbine according to an exemplary embodiment of the present invention,
- Fig. 2: shows two floating offshore wind turbines of a wind park according to an exemplary embodiment of the present invention,
- Fig. 3: shows a computer-readable storage medium having an inventive computer program product stored thereon,
- Fig. 4: shows a diagram to explain a method according to a first embodiment of the present invention,
- Fig. 5: shows a diagram to explain generated power output as known in prior art, and
- Fig. 6: shows a diagram to explain a method according to a second embodiment of the present invention.

### Detailed description of the drawings

Elements and features having the same function and operating principle are labeled with the same reference signs in the drawings. The illustrations in the drawings are schematic.

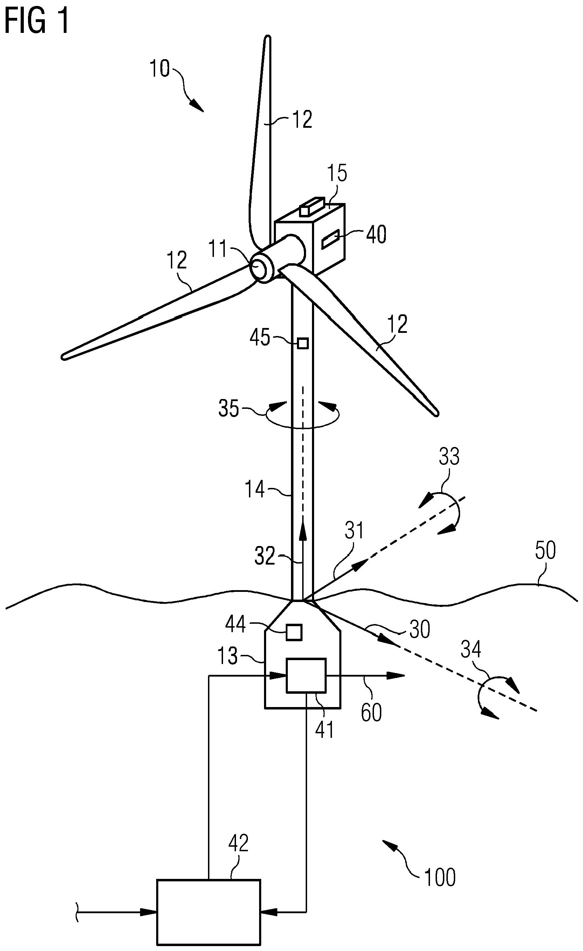

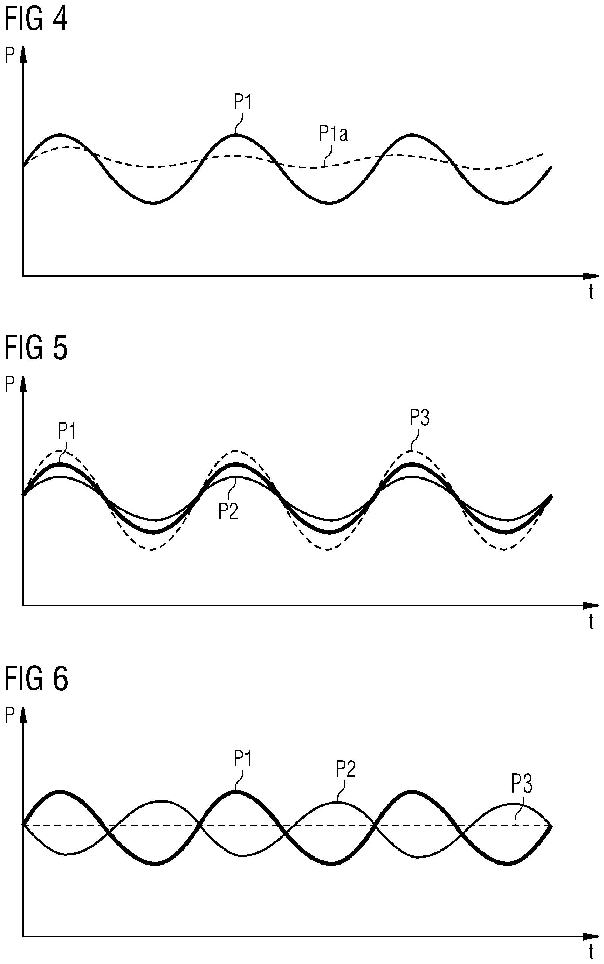

Fig. 1 shows a system 100 for reducing power output fluctuations of a power output P1, P1a, P2, P3 (shown in Fig. 4 and Fig. 6) generated by the floating wind turbine 10. The system 100 is configured for controlling the operation of the floating wind turbine 10 and in this respect, monitoring the operation of the floating wind turbine 10. The floating wind turbine 10 comprises three blades 12 mounted to a nacelle 15, a tower 14 and a floating foundation 13. The floating wind turbine 10 may further comprise a fixing structure having a plurality of mooring lines (not shown) for locating the floating foundation 13 into water and at least partly under a water surface 50.

An incoming wind field acts on the three blades 12 of the floating wind turbine 10 such that electrical energy 60 may be generated by the floating wind turbine 10. The floating wind turbine 10 has six individual degrees of freedom in which the floating wind turbine 10 may move. Namely, three translations surge 30, sway 31 and heave 32, and three rotations roll 33, pitch 34 and yaw 35. The floating wind turbine 10 is configured for providing electrical energy 60 to an electricity grid.

The shown system 100 comprises a power output determining device 40 for determining an amplitude of power output fluctuations generated by the at least one floating wind turbine 10. In Fig. 1, the power output determining device 40 is located in the nacelle 15, however, the power output determining device 40 or parts of the power output determining device 40 could be located in any other part of the floating wind turbine 10 and/or outside the floating wind turbine 10 as well. The power output determining device 40 may comprise at least one sensor, a controller and/or a computer for measuring and/or determining the power output of the floating wind turbine 10.

The system 100 further comprises a wind turbine controlling device 41 for controlling an operation mode of the floating wind turbine 10 based on the determined amplitude in order to lower the amplitude of the power output fluctuations. The wind turbine controlling device 41 is symbolically shown in the floating foundation 13, however, the wind turbine controlling device 41 or parts thereof may also be provided in other sections of the floating wind turbine 10 and/or outside the floating wind turbine 10. The wind turbine controlling device 41 may comprise at least one sensor, at least one actuator, a controller and/or a computer for performing the desired control actions.

Furthermore, the system 100 comprises a rotor speed controlling device 42 for controlling the rotor speed of the rotor 11 based on the determined amplitude in order to lower the amplitude of the power output fluctuations. The rotor speed controlling device 42 is shown by way of example outside the floating wind turbine 10, wherein the rotor speed controlling device 42 or parts thereof may also be provided in different sections of the floating wind turbine 10. The wind turbine controlling device 41 is configured for controlling the operation mode of the floating wind turbine 10 in order to lower the amplitude of the power output fluctuations by initiating one of the following measures: initiating a curtailed operation mode of the floating wind turbine 10 with reduced power output and/or reduced rotor speed, initiating a restricted operation mode of the floating wind turbine 10, in which enhancing of power output and/or rotor speed is prohibited, initiating a blade pitch angle adjusting mode of the at least one floating wind turbine 10, in which a blade pitch angle of at least one blade 12 of the at least one floating wind turbine 10 is changed, or initiating an idle operation mode of the floating wind turbine 10. Moreover, the wind turbine controlling device 41 is configured for changing an operation mode of the floating wind turbine 10, which was initiated for lowering the amplitude of the power output fluctuations, back into a normal operation mode of the floating wind turbine 10, when the amplitude of the determined power output fluctuations of the floating wind turbine 10 becomes lower than a predetermined reference amplitude.

In addition, the system 100 comprises a floater motion determining device 44 for determining the motion and/or location of the floating foundation 13 of the floating wind turbine 10, wherein the wind turbine controlling device 41 is configured for controlling an operation mode of the floating wind turbine 10 based on the determined motion and/or location of the floating foundation 13 in order to lower the amplitude of the power output fluctuations. Furthermore, the system 100 comprises a tower motion determining device 45 for determining the motion and/or location of the tower 14 of the floating wind turbine 10, wherein the wind turbine controlling device 41 is configured for controlling an operation mode of the floating wind turbine 10 based on the determined motion and/or location of the tower 14 in order to lower the amplitude of the power output fluctuations.

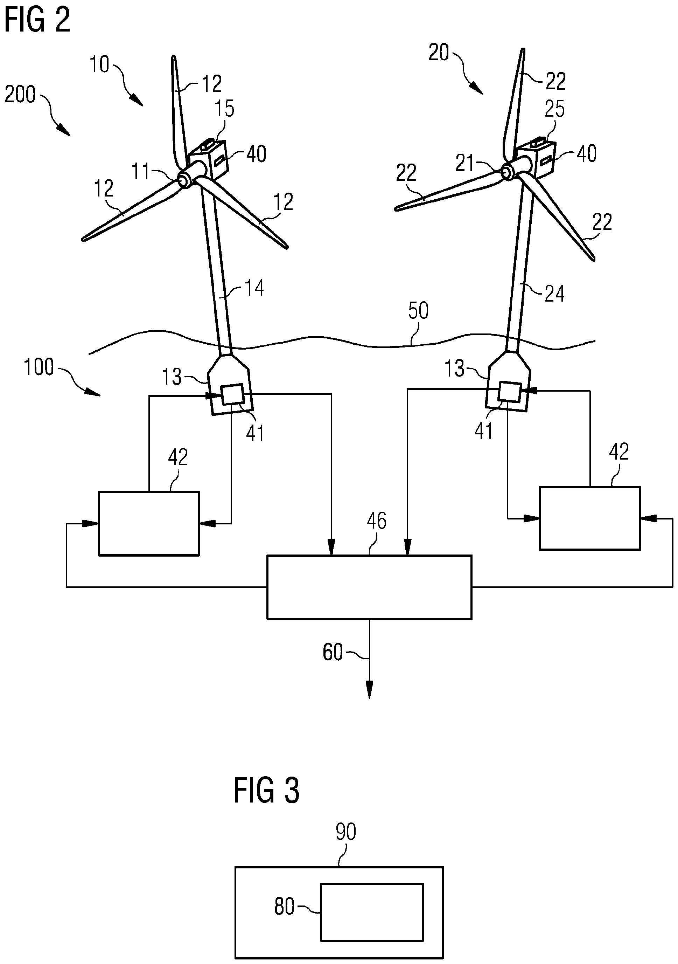

Fig. 2 shows two floating wind turbines 10, 20 of a wind park 200. In Fig. 2, the system 100 is configured for reducing total power output fluctuations of a total power output P3 (shown in Fig. 5 and Fig. 6) generated together by the shown two floating wind turbines 10, 20 each having a rotor 11, 21, three blades 12, 22, a floating foundation 13, 23, a tower 14, 24 and a nacelle 15, 25. The system comprises a total power output determining device 46 for determining a total amplitude of total power output fluctuations generated by the floating wind turbines 10, 20. The total power output determining device 46 is symbolically shown outside the floating wind turbines 10, 20, wherein the total power output determining device 46 or parts of it could also be provided in different parts of the floating wind turbines 10, 20 and/or in different locations outside the floating wind turbines 10, 20. According to the embodiment shown in Fig. 2, the wind turbine controlling device 41 is configured for controlling an operation mode of each floating wind turbine 10, 20 based on the determined total amplitude in order to lower the total amplitude of the total power output fluctuations. The rotor speed controlling device 42 is configured for controlling the rotor speed of the rotor 11, 21 of each floating wind turbine 10, 20 based on the determined total amplitude in order to lower the total amplitude of the total power output fluctuations. Further, the power output determining device 40 is configured for determining an amplitude of the power output fluctuations of each floating wind turbine 10, 20, wherein the wind turbine controlling device 41 is configured for controlling an operation mode of at least one floating wind turbine 10, 20 based on at least one determined amplitude in order to lower the total amplitude of the total power output fluctuations. Moreover, the power output determining device 40 is configured for determining a phase of the power output fluctuations of each floating wind turbine 10, 20, wherein the wind turbine controlling device 41 is configured for controlling an operation mode of at least one floating wind turbine 10, 20 based on at least one determined phase in order to lower the total amplitude of the total power output fluctuations.

Fig. 3 shows a computer-readable storage medium 90 having stored thereon a computer program product 80. The computer program product 80 comprises instructions which, when executed by a computer, cause the computer to carry out a method for controlling and/or operating the shown system 100, the shown floating wind turbine 10, 20 and/or the shown wind park 200.

With regard to Fig. 4, a method for providing electrical energy to an electricity grid by operating a system 100 as shown in Fig. 1 will be described. When operating the system 100, electrical energy 60 and a power output P1, respectively, will be generated. As can be seen in Fig. 4, the power output comprises a frequency having a certain curve and an amplitude and fluctuations, respectively. The amplitude results from different environmental conditions as well as a certain operation mode of the floating wind turbine 10. In order to lower the amplitude of the power output fluctuations, an operation mode of the floating wind turbine 10 is controlled based on the determined amplitude in order to lower the amplitude of the power output fluctuations as shown by the smoothened power output P1a.

With regard to Fig. 5 and Fig. 6, a method for providing electrical energy to an electricity grid by operating a system 100 as shown in Fig. 2 in a wind park 200 will be described. When operating the system 100, electrical energy 60 and a total power output P3, respectively, will be generated. P3 is a sum of the individual power outputs P1 of the first floating wind turbine 10 and the second floating wind turbine 20. This power output P3 and the frequency thereof, respectively, comprises relatively high fluctuations, which are desired to be lowered in order to comply with given grid requirements. Therefore, the total power output determining device 46 determines the total amplitude of total power output fluctuations generated by the floating wind turbines 10, 20 and the wind turbine controlling device 41 controls an operation mode of each floating wind turbine 10, 20 based on the determined total amplitude in order to lower the total amplitude of the total power output fluctuations. In particular, the wind turbine controlling device 41 controls the operation mode of the second floating wind turbine 20 such that the curve of the power output P2 of the second floating wind turbine 20 is phase-shifted to the curve of the first power output P1 such that the curve of the total power output P3 is flattened. In this way, the electrical energy generated by the wind farm can be provided without the undesired power output fluctuations and without the undesired frequency peaks, respectively.

The above description of the accompanying drawings is only by the way of detail and example. Specific features of each aspect of the present invention and the figures can be combined which each other if of technical sense and within the scope of the invention. Further embodiments are possible.

## Claims

1. A system (100) for reducing power output fluctuations of a power output (P1, P1a, P2, P3) generated by at least one floating wind turbine (10, 20) having a rotor (11, 21) and blades (12, 22), comprising:
a power output determining device (40) for determining an amplitude of power output fluctuations generated by the at least one floating wind turbine (10, 20), and
a wind turbine controlling device (41) for controlling an operation mode of the at least one floating wind turbine (10, 20) based on the determined amplitude in order to lower the amplitude of the power output fluctuations.

2. The system (100) according to claim 1, comprising a rotor speed controlling device (42) for controlling the rotor speed of the rotor (11, 21) based on the determined amplitude in order to lower the amplitude of the power output fluctuations.

3. The system (100) according to one of the preceding claims, wherein the wind turbine controlling device (41) is configured for controlling the operation mode of the at least one floating wind turbine (10, 20) in order to lower the amplitude of the power output fluctuations by initiating one of the following measures:
initiating a curtailed operation mode of the at least one floating wind turbine (10, 20) with reduced power output and/or reduced rotor speed,
initiating a restricted operation mode of the at least one floating wind turbine (10, 20), in which enhancing of power output and/or rotor speed is prohibited,
initiating a blade pitch angle adjusting mode of the at least one floating wind turbine (10, 20), in which a blade pitch angle of at least one blade (12, 22) of the at least one floating wind turbine (10, 20) is changed,
initiating an idle operation mode of the at least one floating wind turbine (10, 20).

4. The system (100) according to claim 3, wherein the wind turbine controlling device (41) is configured for changing an operation mode of at least one floating wind turbine (10, 20), initiated for lowering the amplitude of the power output fluctuations, back into a normal operation mode of the at least one floating wind turbine (10, 20), when the amplitude of the determined power output fluctuations of the at least one floating wind turbine (10, 20) becomes lower than a predetermined reference amplitude.

5. The system (100) according to one of the preceding claims, comprising a floater motion determining device (44) for determining the motion and/or location of a floating foundation (13, 23) of the at least one floating wind turbine (10, 20), wherein
the wind turbine controlling device (41) is configured for controlling an operation mode of the at least one floating wind turbine (10, 20) based on the determined motion and/or location of the floating foundation (13, 23) in order to lower the amplitude of the power output fluctuations.

6. The system (100) according to one of the preceding claims, comprising a tower motion determining device (45) for determining the motion and/or location of a tower (14, 24) of the at least one floating wind turbine (10, 20), wherein
the wind turbine controlling device (41) is configured for controlling an operation mode of the at least one floating wind turbine (10, 20) based on the determined motion and/or location of the tower (14, 24) in order to lower the amplitude of the power output fluctuations.

7. The system (100) according to one of the preceding claims for reducing total power output fluctuations of a total power output (P3) generated together by floating wind turbines (10, 20) each having a rotor (11, 21) and blades (12, 22), comprising
a total power output determining device (46) for determining a total amplitude of total power output fluctuations generated by the floating wind turbines (10, 20), and
the wind turbine controlling device (41) is configured for controlling an operation mode of each floating wind turbine (10, 20) based on the determined total amplitude in order to lower the total amplitude of the total power output fluctuations.

8. The system (100) according to claim 7, wherein the rotor speed controlling device (42) is configured for controlling the rotor speed of the rotor (11, 21) of each floating wind turbine (10, 20) based on the determined total amplitude in order to lower the total amplitude of the total power output fluctuations.

9. The system (100) according to one of claims 7 - 8, wherein the power output determining device (40) is configured for determining an amplitude of the power output fluctuations of each floating wind turbine (10, 20), and
the wind turbine controlling device (41) is configured for controlling an operation mode of at least one floating wind turbine (10, 20) based on at least one determined amplitude in order to lower the total amplitude of the total power output fluctuations.

10. The system (100) according to one of claims 7 to 9, wherein the power output determining device (40) is configured for determining a phase of the power output fluctuations of each floating wind turbine (10, 20), and
the wind turbine controlling device (41) is configured for controlling an operation mode of at least one floating wind turbine (10, 20) based on at least one determined phase in order to lower the total amplitude of the total power output fluctuations.

11. A floating wind turbine (10, 20) comprising a system (100) according to one of the preceding claims for reducing power output fluctuations of a power output (P1, P1a, P2) generated by the floating wind turbine (10, 20).

12. A wind park (200) comprising floating wind turbines (10, 20) and a system (100) according to one of the claims 7 - 10 for reducing total power output fluctuations of a total power output (P3) generated together by the floating wind turbines (10, 20).

13. A method for providing electrical energy to an electricity grid by operating a system (100) according to one of the claims 1 - 10, and/or in particular wherein the method comprises the following steps:
operating a wind turbine, in particular an offshore wind turbine, further in particular a floating offshore wind turbine, and feeding electrical energy to an electricity grid
executing steps of an embodiment of a method as disclosed supra, and/or operating an embodiment of a device as disclosed supra,
generating, by the wind turbine, electrical power and/or electrical energy,
transmitting at least a part of the electrical power and/or of the electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction, and
supplying at least a part of the electrical power and/or of the electrical energy to an electrical utility grid, in particular onshore utility grid.

14. A computer program product (80) comprising instructions which, when executed by a computer, cause the computer to carry out the method of claim 13.

15. A computer-readable storage medium (90) having stored thereon the computer program product (80) according to claim 14.
